# FASCICULE DE BREVET EUROPEEN

(11) **EP 0 985 593 B1**
(45) Date de publication et mention de la délivrance du brevet: **14.05.2003**
(21) Numéro de dépôt: 99402182.2
(22) Date de dépôt: 03.09.1999
(51) Int. Cl.: B62D 25/06, B60J 1/02

(54) **Chassis de véhicule automobile**
Kraftfahrzeugchassis
Motor vehicle chassis

(30) Priorité: 09.09.1998 FR 9811273
(43) Date de publication de la demande: 15.03.2000
(73) Titulaire: Renault s.a.s., 92100 Boulogne Billancourt (FR)
(72) Inventeur: Flan, Richard, 93160 Noisy-le-Grand (FR); Pastourel, Dominique, 91790 Boissy sous Saint Yon (FR)

(56) Documents cités:
- DE-A- 2 246 847
- GB-A- 2 098 552

## Description

L'invention concerne un châssis de véhicule automobile, et plus particulièrement un châssis, support de carrosserie de véhicule, comportant au moins une traverse supérieure de baie.

On connaît de manière générale dans l'état de la technique des châssis de véhicule comportant au moins une traverse supérieure de baie et une traverse arrière de pavillon, disposées perpendiculairement à l'axe longitudinal du véhicule et reliant les parties droite et gauche de la membrure de pavillon dudit véhicule. Ces traverses supérieure de baie et arrière de pavillon délimitent respectivement les bords avant et arrière du pavillon du véhicule.

De manière générale, la traverse supérieure de baie d'un tel véhicule se trouve sensiblement à la verticale du tableau de bord et délimite la partie supérieure du pare-brise dudit véhicule. De la même manière, la traverse arrière de pavillon d'un tel véhicule se trouve sensiblement à la verticale de la plage arrière et délimite la partie supérieure de la lunette arrière.

Une telle disposition des traverses supérieure de baie et arrière de pavillon, et notamment celle de la traverse supérieure de baie, restreint très sensiblement l'espace vitré du véhicule. Ainsi, la vision des passagers avant et arrière est limitée à la surface sensiblement rectangulaire et réduite du pare-brise. Le champ de vision des passagers n'est donc pas maximal.

Afin de pallier à ce problème, il existe des pavillons intégralement vitrés. Ces pavillons conservent les traverses supérieure de baie et arrière de pavillon localisées aux mêmes places que pour un pavillon en tôle. La traverse supérieure de baie crée alors un angle mort, gênant ainsi la vision des passagers avant et arrière.

La publication FR-2 742 386 décrit un nouveau type d'ouverture de porte avant pour véhicule avec demi pare-brise de toit ouvrant. Une telle solution qui a donc pour but de maximiser la surface vitrée conserve des éléments de liaison entre les différentes vitres. Ces éléments de liaison ne résolvent pas le problème des angles morts.

La publication WO-A-97 35735 décrit également un système pour véhicule automobile permettant de maximiser le champ visuel correspondant au préambule de la revendication 1. Un tel système se compose d'un pare-brise pivotant. Ce système est relativement compliqué et difficile à mettre en oeuvre.

L'invention a donc pour objet de remédier à ces inconvénients en proposant une disposition de la traverse supérieure de baie du véhicule qui permet l'utilisation d'un pare-brise monobloc, qui s'étend de la planche de bord aux places arrière de manière à maximiser le champ visuel du conducteur et des passagers.

L'invention a également pour objet de proposer un véhicule automobile dont la traverse supérieure de baie forme également la traverse arrière de pavillon, tout en réalisant un élément du design extérieur du véhicule.

Selon une caractéristique de l'invention, la traverse supérieure de baie est située sensiblement à la verticale des passagers arrière du véhicule, dans la partie arrière de l'habitacle.

Selon une autre caractéristique de l'invention, le pare-brise dudit véhicule s'étend dans l'espace délimité par les profils de membrure de pavillon et les traverses inférieure et supérieure de baie.

Selon une autre caractéristique de l'invention, la traverse supérieure de baie constitue un renfort de pavillon dudit véhicule.

Selon une autre caractéristique de l'invention, la traverse supérieure de baie forme également la traverse arrière de pavillon.

Selon une autre caractéristique de l'invention, la traverse supérieure de baie est visible et forme ainsi un élément participant au design extérieur du véhicule.

D'autres avantages et caractéristiques de l'invention seront mis en évidence dans la description qui suit, donnée à titre d'exemple, d'un châssis de véhicule automobile en référence à l'unique dessin annexé.

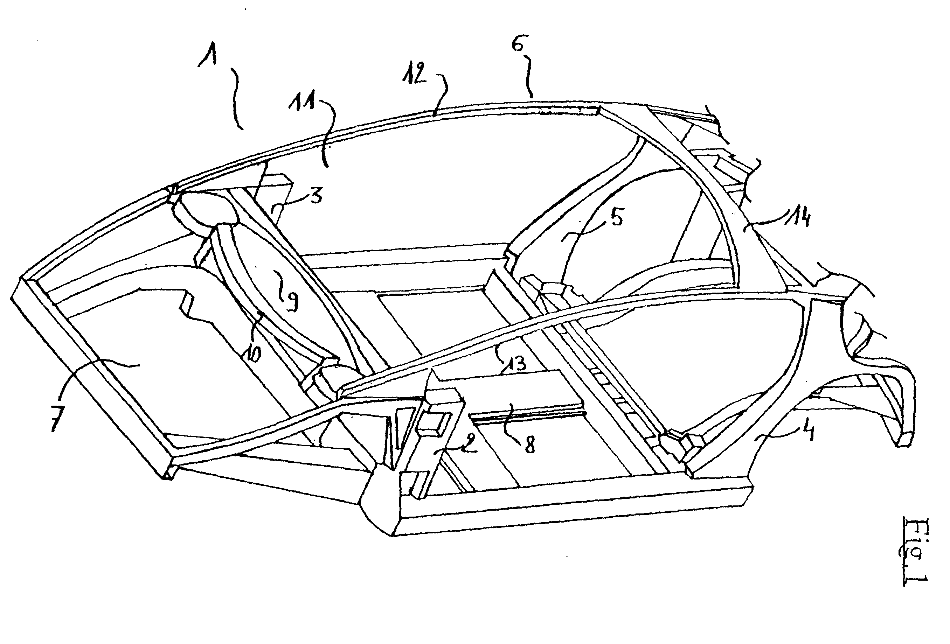

La figure 1 représente une vue perspective d'un châssis de véhicule automobile comprenant la traverse supérieure de baie selon l'invention.

Un châssis 1 de véhicule automobile selon l'invention se compose d'éléments délimitant un habitacle. Cet habitacle est généralement constitué de pieds avant 2 et 3 et de pieds arrière 4 et 5, reliant une membrure supérieure 6 avec une charpente porteuse 8.

Un tablier 9 constitue la séparation entre le bloc avant 7 du véhicule et la partie avant de l'habitacle. Sensiblement en avant de ce tablier 9 se trouve une traverse inférieure de baie 10 qui constitue la limite inférieure du pare-brise 11.

La membrure supérieure 6 se compose de deux profils 12 et 13 disposés dans le sens longitudinal du véhicule, lesdits profils étant sensiblement parallèles. L'écartement de ces profils délimite la largeur du pavillon du véhicule.

Une traverse supérieure de baie 14 vient relier les deux profils 12 et 13 selon un axe perpendiculaire à celui du véhicule. La traverse 14 est située sensiblement à la verticale des passagers arrière du véhicule, dans la partie arrière de l'habitacle. La partie arrière s'étendant entre une zone située sensiblement à la verticale de la tête des passagers arrière et la plage arrière.

Cette traverse 14 délimite la partie supérieure du pare-brise. De cette manière, le véhicule selon l'invention possède un pare-brise monobloc qui s'étend de la traverse inférieure de baie 10 du véhicule à la traverse supérieure de baie 14.

La traverse 14 joue également le rôle de rigidificateur du pavillon. Sa position assure la sécurité des passagers en cas de retournement du véhicule automobile. Ce renforcement de la structure est amélioré par la proximité du pied arrière.

Ainsi, la position de la traverse 14 permet de créer une surface vitrée maximale pour le pare-brise sans compromettre la sécurité du conducteur et des passagers dans l'habitacle. La vision des passagers s'en trouve grandement améliorée, tout en limitant le nombre d'angles morts.

De plus, cette position de la traverse 14 crée un effet esthétique non négligeable parmi les avantages de l'invention.

Telle que représentée à la figure 1, la membrure supérieure 6 est reliée aux pieds avant 2, 3 et arrière 4, 5, ce qui définit une large ouverture latérale.

Dans un autre exemple de réalisation, la traverse 14 forme également la traverse arrière de pavillon. Cette traverse peut être visible et former ainsi un élément participant au design extérieur du véhicule.

Dans le cas de l'utilisation d'une structure aluminium, la traverse 14 peut avantageusement être réalisée en finition brossée ou polie.

## Revendications

1. Châssis de véhicule automobile (1), support de carrosserie de véhicule, comportant un pare-brise monobloc et une traverse supérieure de baie (14), **caractérisé en ce que** la traverse supérieure de baie (14) est située sensiblement à la verticale des passagers arrière du véhicule, dans la partie arrière de l'habitacle.

2. Châssis de véhicule automobile selon la revendication 1, **caractérisé en ce que** le pare-brise (11) dudit véhicule s'étend dans l'espace délimité par les profils de membrure de pavillon (12, 13) et les traverses inférieure et supérieure de baie (10,14).

3. Châssis de véhicule automobile selon la revendication 2, **caractérisé en ce que** la traverse supérieure de baie (14) constitue un renfort de pavillon dudit véhicule.

4. Châssis de véhicule automobile selon l'une des revendications 1 à 3, **caractérisé en ce que** la traverse supérieure de baie (14) forme également la traverse arrière de pavillon.

5. Châssis de véhicule automobile selon la revendication 4 , **caractérisé en ce que** la traverse supérieure de baie (14) est visible et forme ainsi un élément participant au design extérieur du véhicule.

## Claims

1. Automotive vehicle chassis (1) supporting vehicle bodywork, comprising a single-piece windscreen and an upper space-crossing cross-member (14), **characterised in that** the upper space-crossing cross-member (14) is located substantially vertically with respect to the rear passengers of the vehicle, in the rear part of the passenger cabin.

2. Automotive vehicle according to claim 1, **characterised in that** the windscreen (11) of said vehicle extends within the space delimited by the roof rib sections (12, 13) and the lower and upper space-crossing crossmembers (10, 14).

3. Automotive vehicle chassis according to claim 2, **characterised in that** the upper space-crossing cross-member (14) constitutes a strengthening means for the roof of said vehicle.

4. Automotive vehicle chassis according to one of claims 1 to 3, **characterised in that** the upper space-crossing cross-member (14) also forms the rear roof cross-member.

5. Automotive vehicle chassis according to claim 4, **characterised in that** the upper space-crossing cross-member (14) is visible and thus forms an element contributing to the exterior design of the vehicle.

## Patentansprüche

1. Fahrgestell (1) für ein Kraftfahrzeug, welches die Karosserie trägt, mit einer einstückigen Windschutzscheibe und mit einem oberen Querträger (14) des Rahmens, **dadurch gekennzeichnet, dass** der obere Querträger (14) des Rahmens im wesentlichen senkrecht oberhalb der hinten sitzenden Passagiere des Fahrzeuges, im hinteren Bereich des Passagierraums angeordnet ist.

2. Fahrgestell für ein Kraftfahrzeug nach Anspruch 1, **dadurch gekennzeichnet, dass** die Windschutzscheibe (11) dieses Fahrzeuges sich in der Fläche erstreckt, die von den Profilteilen (12, 13) der Dachumrandung und den unteren und oberen Querträgern (10, 14) des Rahmens begrenzt wird.

3. Fahrgestell für ein Fahrzeug nach Anspruch 2, **dadurch gekennzeichnet, dass** der obere Querträger (14) des Rahmens eine Verstärkung für das Dach des Fahrzeuges bildet.

4. Fahrgestell für ein Fahrzeug nach Ansprüchen 1 bis 3, **dadurch gekennzeichnet, dass** der obere Querträger (14) des Rahmens zugleich der hintere Querträger des Daches ist.

5. Fahrgestell für ein Fahrzeug nach Anspruch 4, **dadurch gekennzeichnet, dass** der obere Querträger (14) des Rahmens sichtbar ist und dadurch ein zum Außendesign des Fahrzeuges beitragendes Bauteil ist.
